# EUROPÄISCHE PATENTANMELDUNG

(11) **EP 0 614 302 A1**
(43) Veröffentlichungstag der Anmeldung: **07.09.1994**
(21) Anmeldenummer: 94102789.8
(22) Anmeldetag: 24.02.1994
(51) Int. Cl.: H04M 1/00

(54) **Telekommunikationseinrichtung bestehend aus einem Endgerät und Schnittstellen für eine Memorykarte und eine Chipkarte**

(30) Priorität: 27.02.1993 DE 4306198
(71) Anmelder: Alcatel SEL Aktiengesellschaft, D-70435 Stuttgart (DE)
(72) Erfinder: Huzenlaub, Richard, D-75339 Höfen (DE); Landwehr, Gerhard, D-71287 Weissach (DE)
(74) Vertreter: Knecht, Ulrich Karl

(57) **Zusammenfassung**

Telekommunikationseinrichtung die sich an Erweiterung von Leistungsmerkmalen anpassen läßt und überall anwendbar ist.

Telekommunikationseinrichtung bestehend aus Endgerät, Chipkarte und Memorykarte; Memorykarte erweitert den Speicher; Chipkarte enthält Benutzeroberfläche und Gerätekonfiguration.

## Beschreibung

Bisher bekannte Telekommunikationseinrichtungen bestehen aus einem Telekommunikationsendgerät und **einer** Karte als tragbare Komponente. Die Karte kann entweder eine sogenannte Chipkarte oder aber eine Memorykarte sein. Die Memorykarte setzt sich aus Speicherbausteinen mit nicht flüchtigem Speicher zusammen. Desweiteren befindet sich aber keine "Intelligenz" auf der Memorykarte. Die Chipkarte, die auch unter dem Namen Smart-Card oder Memokarte (Memocard) bekannt ist besitzt eine eingebaute Intelligenz in Form eines Mikroprozessors und Speicherbausteine mit nicht flüchtigem Speicher ("Chip Cards (Memocards) and Telecommunications"; George J. Lissandrello; Pacific Telecommunications Council; Honolulu, USA, 1986; S. 166-175).

Bekannte Chipkarten werden verwendet als "elektronisches Geld", als "elektronischer Schlüssel" oder als "tragbarer Informationsspeicher". Hierbei können beispielsweise häufig gewählte Telefonnummern auf der Chipkarte gespeichert werden und an öffentlichen Telefonen unter dem Leistungsmerkmal "Kurzwahl" abgerufen werden. ("Chipkarten; Karten mit "Gedächtnis"; Eberhard Schröther; Funkschau 7/1988; S. 50-52).

Weitere Verwendungen findet die Chipkarte als "geschützte Speicherung von Daten", als "Datenverschlüsselung in der Karte (end to end enclyption)", als "gegenseitige Authentifizierung von Karte und Terminal", als "elektronische Unterschrift" und als "Identitätsprüfung in der Karte" ("Die Chipkarte in modernen Kommunikationssystemen"; Wolfgang Effing; ITG Fachberichte; vol. 101; p 451-464).

Jedoch werden Karten nicht nur bei Telekommunikationsendgeräten verwendet. Auch bei Druckern werden Karten, hier sogenannte IC-Karten, zur Erweiterung des aktiven Zeichensatzes eingesetzt (Kyocera Laserdrucker, F 2200, Japan).

Der Erfindung liegt die Aufgabe zugrunde eine Telekommunikationseinrichtung zu entwickeln, welche in einfacher Weise an den jeweiligen Stand der Technik anpassbar ist.

Die Aufgabe wird erfindungsgemäß gelöst durch die Lehre des ersten Patentanspruchs und durch die Lehre des neunten und zehnten Patentanspruchs.

Ein Vorteil der Erfindung liegt darin, daß eine von einem Benutzer der Telekommunikationseinrichtung individuell gewünschte Anzahl an Leistungsmerkmalen mit einer individuell gewünschten Benutzeroberfläche an jedem Ort und zu jeder Zeit zur Verfügung steht.

Ein weiterer Vorteil ist, daß die Telekommunikationseinrichtung entsprechend dem fortschreitenden Stand der Technik an die neue Technik anpassbar ist, ohne eine vollständige Erneuerung der Telekommunikationseinrichtung vornehmen zu müssen. Dies gewährleistet eine Zukunftssicherheit der Telekommunikationseinrichtung, denn sie ist mittels der Chipkarte und der Memorykarte an neue Softwareprogramme anpassbar und an neue Techniken adaptierbar.

Vorteilhafte Weiterentwicklungen der Telekommunikationseinrichtung sind den Patentansprüchen 2 bis 8 zu entnehmen.

Nach Unteranspruch 2 wird mittels der Chipkarte eine Identifikation und Authentifikation gegenüber einem Telekommunikationsnetzwerk oder einer Nebenstellenanlage vorgenommen. Nach einem erfolgten Ortswechsel wird dies, z.B. durch Einstecken der Chipkarte ausgeführt und der neue Aufenthaltsort ist in dem Telekommunikationsnetzwerk oder in der Nebenstellenanlage vermerkt, ebenso wie die Berechtigung zur Benutzung von Diensten.

Nach Unteranspruch 3 sind die Chipkarte und die Memorykarte individuell programmierbar. Somit ist ein Benutzer einer Telekommunikationseinrichtung in der Lage von ihm gewünschte Leistungsmerkmale mit sich zu führen und anzuwenden.

Nach Unteranspruch 4 ist es möglich in verschiedenen Ländern die entsprechenden Standardprotokolle präsent zu haben und somit einen Betrieb einer Telekommunikationseinrichtung zu jeder Zeit und an jedem Ort zu ermöglichen.

Nach Unteranspruch 5 führt ein Benutzer einer Telekommunikationseinrichtung Softwareprogramme zur Ausführung von Leistungsmerkmalen mit sich. Somit besteht ebenfalls die Möglichkeit genau die Leistungsmerkmale mit sich zu führen die der Benutzer präsent haben möchte.

Nach Unteranspruch 6 läßt sich die Software und die entsprechende Hardware in dem Telekommunikationsgerät so reduzieren, daß lediglich noch ein Urladeprogramm gespeichert und aufrufbar ist.

Nach Unteranspruch 7 befindet sich auf der Memorykarte ein Bedienerhandbuch als Softwareprogramm abgespeichert. Dies dient zur Hilfe bei anfänglicher Benutzung einer Telekommunikationseinrichtung oder aber als stets präsente Hilfe bei Verwendung selten genutzter Leistungsmerkmale oder Funktionen.

Nach Unteranspruch 8 kann zur Erweiterung des Speichers gleichzeitig mindestens eine weitere Memorykarte von dem Telekommunikationsendgerät aufgenommen werden.

In Unteranspruch 9 und 10 wird die Verwendung der Chipkarte und der Memorykarte beschrieben.

Im folgenden wird die Erfindung anhand der Figuren näher erläutert. Folgende Figuren zeigen:
- Fig. 1: eine schematische Seitenansicht der Telekommunikationseinrichtung,
- Fig. 2: ein Blockschaltbild der Telekommunikationseinrichtung.

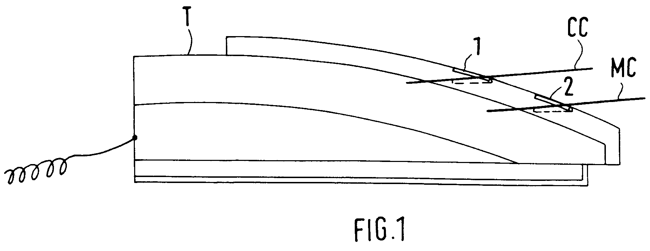

Die erfindungsgemäße Telekommunikationseinrichtung besteht, wie aus Fig. 1 zu entnehmen, aus einem Telekommunikationsendgerät T, einer ersten Schnittstelle 1, einer zweiten Schnittstelle 2, einer Chipkarte CC und einer Memorykarte MC.

Die erste Schnittstelle 1 und die zweite Schnittstelle 2 befinden sich in dem Telekommunikationsendgerät. Die erste Schnittstelle 1 dient zur Aufnahme der Chipkarte CC und die zweite Schnittstelle 2 dient zur Aufnahme der Memorykarte MC.

Die Karten können beispielsweise in die Schnittstellen eingesteckt werden. Desweiteren sind aber auch optische Schnittstellen zur Aufnahme der Karten möglich. Die Anordnung der Schnittstellen in dem Telekommunikationsendgerät ist beliebig. Eine Möglichkeit ist entsprechend der Fig. 1 eine vertikale Anordnung.

Zur zusätzlichen Erweiterung des Speichers kann mindestens eine weitere Memorykarte MC verwendet werden. Die zweite Schnittstelle 2 die zur Aufnahme der Memorykarte MC dient ist für diesen Fall so ausgestaltet, daß sie mindestens zwei Memorykarten MC gleichzeitig aufnehmen kann.

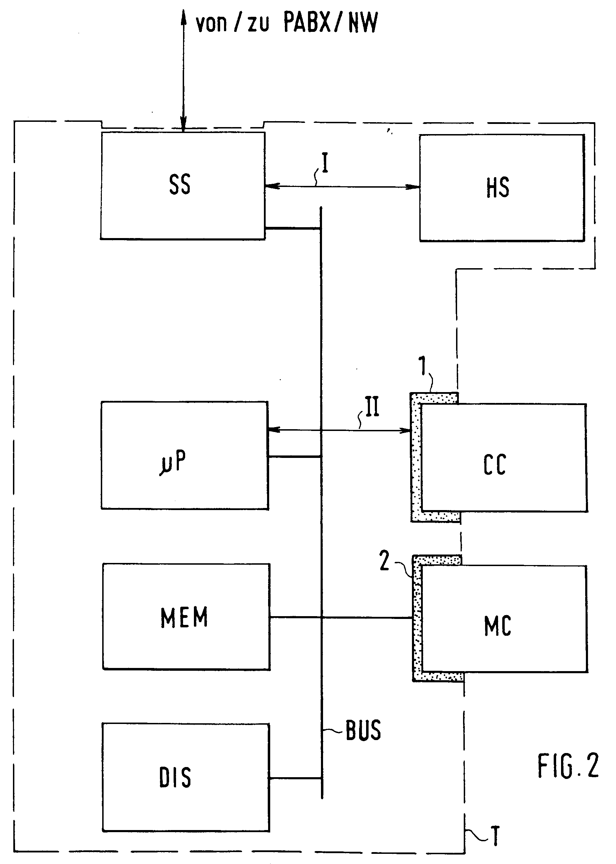

Im folgenden wird anhand von Fig. 2 eine Ausführungsform erläutert und die Wirkungsweise der Telekommunikationseinrichtung erklärt.

Das Telekommunikationsendgerät T der Telekommunikationseinrichtung - hier ein Telefon - setzt sich aus einem Handapparat HS - hier mit Tastatur -, aus einem Mikroprozessor µP, aus einem Speicher MEM, aus einem Display DIS, aus einer Leitungsschnittstelle SS, aus einem Bus BUS, aus der ersten Schnittstelle 1 und der zweiten Schnittstelle 2 zusammen.

Der Handapparat HS ist über eine bidirektionale Leitung I mit der Leitungsschnittstelle SS verbunden.

Die erste Schnittstelle 1 ist über eine bidirektionale Datenleitung II mit dem Mikroprozessor µP verbunden.

Die Leitungsschnittstelle SS, der Mikroprozessor µP, der Speicher MEM, das Display DIS und die zweite Schnittstelle 2 sind über einen gemeinsamen Bus BUS untereinander verbunden.

Von der Leitungsschnittstelle aus besteht eine Verbindung von oder zu einer Nebenstelle oder einem Telekommunikationsnetzwerk (von/zu PABX/NW).

In die erste Schnittstelle 1 wird die Chipkarte CC eingeführt, und in die zweite Schnittstelle 2 wird die Memorykarte MC eingeführt.

Erfindungsgemäß kann eine Chipkarte CC und eine Memorykarte MC in einem Telekomunikationsendgerät verwendet werden.

Eine mögliche Ausführungsform der Chipkarte CC ist eine Karte nach dem ISO (International Standardizing Organization) Standard 7816. Dieser Standard legt die Lage der Kontakte sowie die elektrischen Eigenschaften auf der Chipkarte fest. Entsprechendes gilt für die erste Schnittstelle 1 in die die Chipkarte CC eingesteckt wird.

Eine mögliche Ausführungsform der Memorykarte MC für den Fall, daß ein Einstecken in die zweite Schnittstelle 2 erfolgen soll, ist die Verbindung zu dem Telekommunikationsapparat über die in der JEIDA (Japan Electronic Industry Development Association) Norm festgelegten Kontakte.

Die Wirkungsweise läßt sich bei eingesteckter Chipkarte CC und Memorykarte MC wie folgt erklären:
Die Memorykarte MC stellt eine Erweiterung des Speichers der Telekommunikationseinrichtung dar, also einen zusätzlichen Datenspeicher. Über den Bus BUS können sowohl über die zweite Schnittstelle 2 von der Memorykarte MC, als auch aus dem Speicher MEM Daten ausgelesen und eingeschrieben werden. Der Mikroprozessor µP greift ebenfalls auf den Bus BUS zu und erhält zu verarbeitende Daten oder gibt bereits verarbeitete Daten zurück.

Über die Datenleitung II werden dem Mikroprozessor Daten von der Chipkarte CC zugeführt. Aber von dem Mikroprozessor µP können ebenfalls Daten auf die Chipkarte CC zurückgegeben werden.

Das Display DIS das ebenfalls über den Bus BUS Daten empfangen kann, formt diese in visualisierbare Daten um und gibt sie aus.

Über die Schnittstelle SS werden ebenfalls Daten mittels des Busses BUS an eine Nebenstellenanlage PABX oder an ein Telekommunikationsnetzwerk NW übertragen. In entgegengesetzter Richtung erfolgt dies in äquivalenter Weise.

Über eine bidirektionale Leitung I werden Daten von dem Handapparat HS über die Schnittstelle SS auf den Bus BUS gegeben.

Von der Chipkarte CC wird eine Benutzeroberfläche und eine Konfiguration des Telekommunikationsendgerätes zur Verfügung gestellt. Die Konfiguration des Telekommunikationsendgerätes legt die Zugriffsrechte fest die ein Benutzer des Telekommunikationsendgerätes hat. Durch das Einführen der Chipkarte CC werden die von dem Benutzer gewünschten Zugriffsmöglichkeiten aktiviert und zur Verfügung gestellt.

Die Benutzeroberfläche des Telekommunikationsendgerätes legt die Zuordnung einer Taste oder einer Tastenkombination zu einem ausführbaren Leistungsmerkmal fest. Mittels der Benutzeroberfläche ist jedes Leistungsmerkmal beliebig einfach aufrufbar.

Die Chipkarte CC und die Memorykarte MC können in sich an verschiedenen Orten befindende Telekommunikationsendgeräte eingeführt werden. Bei Einführen der Chipkarte CC wird eine Identifikation und Authentifikation gegenüber dem Telekommunikationsnetzwerk NW oder der Nebenstellenanlage PABX durchgeführt. Ist der Benutzer als berechtigter Benutzer identifiziert kann er beispielsweise eine Rufumleitung einrichten oder eine Anrufbeantworterfunktion aktivieren oder sonstige Leistungsmerkmale benutzen.

Auf der Memorykarte MC führt der Benutzer beispielsweise ein Wahlregister mit sich oder Software für Leistungsmerkmale. Desweiteren können sich auf der Memorykarte MC Telekommunikationsprotokolle für verschiedene Länder befinden, denn in den verschiedenen Ländern laufen unterschiedliche Telekommunikationsprotokolle ab. So kann ein Benutzer, der sich beispielsweise regelmäßig in Deutschland und Frankreich befindet beide Ländervarianten gespeichert haben. Ergibt es sich nun, daß der Benutzer ebenfalls häufiger nach Großbritannien reisen muß, kann er zusätzlich die entsprechenden Telekommunikationsprotokolle speichern.

Ebenso kann auf der Memorykarte ein Bedienhandbuch als Software abgelegt werden. Bei Problemen während der Benutzung eines Telekommunikationsendgerätes kann dieses zur Hilfe herangezogen werden. Falls ein solches Bedienhandbuch nicht mehr genutzt werden muß, kann es gelöscht oder mit anderer Software überspielt werden.

In dem Telekommunikatonsendgerät selbst muß lediglich ein Urladeprogramm gespeichert und aufrufbar sein. Dieses Urladeprogramm das sogenannte Boot-Strap, ermöglich es daß die Softwareprogramme der Chipkarte CC und der Memorykarte MC gelesen werden können und daß sie als Softwareprogramme erkannt werden.

Besondere Verwendung findet die erfindungsgemäße Telekommunikationseinrichtung bei der Einführung neuer Dienste z.B. bei ISDN (Integrated Serviced Digital Network) oder DECT (Digital European Cordless Telephone). Da die Einführung der neuen Dienste stufenweise erfolgt, vergrößert sich die Software also auch stufenweise. Bei der hier vorliegenden Erfindung erfolgt die Anpassung und die Aufnahme der vergrößerten Software mittels der Chipkarte CC und der Memorykarte MC.

## Patentansprüche

1. Telekommunikationseinrichtung bestehend aus
- einem Telekommunikationsendgerät (T) mit einer ersten Schnittstelle (1) für eine Chipkarte (CC) und mit einer zweiten Schnittstelle (2) für eine Memorykarte (MC),
- der Memorykarte (MC) zur Erweiterung des Speichers und
- der Chipkarte (CC), welche eine Benutzeroberfläche und eine Konfiguration des Telekommunikationsendgerätes zur Verfügung stellt.

2. Telekommunikationseinrichtung nach Anspruch 1, bei der mittels der Chipkarte (CC) eine Identifikation und Authentifikation gegenüber einem Telekommunikationsnetzwerk oder einer Nebenstellenanlage vorgenommen wird.

3. Telekommunikationseinrichtung nach Anspruch 1 oder 2, bei der die Chipkarte (CC) und die Memorykarte (MC) individuell programmierbar sind.

4. Telekommunikationseinrichtung nach einem der Ansprüche 1 bis 3, bei der auf der Memorykarte (MC) verschiedene Telekommunikationsprotokolle für verschiedene Länder gespeichert sind.

5. Telekommunikationseinrichtung nach einem der Ansprüche 1 bis 4, bei der auf der Memorykarte (MC) Softwareprogramme zur Ausführung von Leistungsmerkmalen gespeichert sind.

6. Telekommunikationseinrichtung nach einem der Ansprüche 1 bis 5, bei der in dem Telekommunikationsendgerät (T) nur ein Urladeprogramm gespeichert und aufrufbar ist.

7. Telekommunikationseinrichtung nach einem der Ansprüche 1 bis 6, bei der auf der Memorykarte (MC) ein Bedienhandbuch als Software gespeichert ist.

8. Telekommunikationseinrichtung nach einem der Ansprüche 1 bis 7, bei der in der zweiten Schnittstelle (2) für die Memorykarte (MC) gleichzeitig mindestens eine weitere Memorykarte aufgenommen werden kann.

9. Verwendung einer Chipkarte (CC) um eine Konfiguration eines Telekommunikationsendgerätes und eine Benutzeroberfläche zur Verfügung zu stellen.

10. Verwendung einer Memorykarte (MC) zur Erweiterung des Speichers, um Softwareprogramme für Leistungsmerkmale und um Telekommunikationsprotokolle zu speichern.
